# EUROPÄISCHE PATENTSCHRIFT

(11) **EP 0 643 096 B1**
(45) Veröffentlichungstag und Bekanntmachung des Hinweises auf die Patenterteilung: **04.11.1998**
(21) Anmeldenummer: 94112546.0
(22) Anmeldetag: 11.08.1994
(51) Int. Cl.: C08K 5/50, C08L 69/00

(54) **Stabilisierte, flammwidrige Polycarbonatformmassen**
Stabilized flame retardant polycarbonate moulding compositions
Compositions à mouler stabilisées et ignifugées à base de polycarbonate

(30) Priorität: 24.08.1993 DE 4328384
(43) Veröffentlichungstag der Anmeldung: 15.03.1995
(73) Patentinhaber: BAYER AG, 51368 Leverkusen (DE)
(72) Erfinder: Buysch, Hans-Josef, Dr., D-47809 Krefeld (DE); Fengler, Gerd, Dr., D-47802 Krefeld (DE); Fennhoff, Gerhard, Dr., D-47877 Willich (DE); Horn, Klaus, Dr., D-41539 Dormagen (DE)

(56) Entgegenhaltungen:
- EP-A- 0 143 906
- EP-A- 0 175 919
- EP-A- 0 422 438
- WO-A-82/02895
- FR-A- 2 194 716
- FR-A- 2 256 213

## Beschreibung

Gegenstand der vorliegenden Erfindung sind Mischungen aus thermoplastischen, aromatischen Polycarbonaten, und
a) Triphenylphosphansulfonaten der Formel (I) 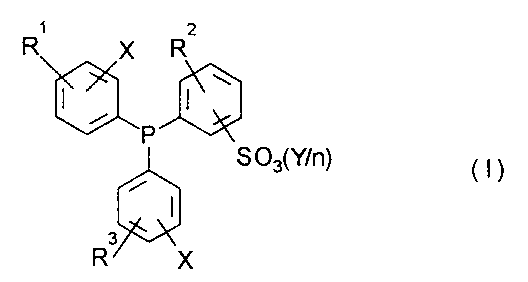 in Mengen von 0,001 Gew.-% bis 1 Gew.-%, vorzugsweise von 0,005 Gew.-% bis 0,8 Gew.-%, bezogen auf Gewicht Polycarbonat, worin R¹, R² und R³ gleich oder verschieden sind und H, C₁-C₄-Alkyl, C₁-C₄-Alkoxy, F, Cl, Carboxy oder -CN sein können,
   "X" Wasserstoff oder -SO₃(Y/n), und n = 1, wenn "Y" ein Alkalikation, und n = 2, wenn "Y" ein Erdalkalikation ist,
   wobei die Sulfonat-Gruppen in m- oder p-Stellung zum Phosphor stehen und die Reste R¹, R² und R³ in o-, m- und p-Stellung zum Phosphor stehen, und gegebenenfalls
b) fluorierten Polyolefinen in Mengen von 0,001 Gew.-% bis 2 Gew.-%, vorzugsweise von 0,01 Gew.-% bis 1 Gew.-%, bezogen wiederum auf Gewicht Polycarbonat.

Die erfindungsgemäßen Mischungen vereinen ein günstiges Eigenschaftsbild, sie sind flammwidrig (VO-Klassifizierung nach UL 94 bei 3,2 mm Dicke ohne Zusatz von fluorierten Polyolefinen und bei 1,6 mm Dicke mit Zusatz von fluorierten Polyolefinen) und außerdem farbstabil bei thermischer Belastung. Man braucht nur ein Additiv für die Flammschutzwirkung und für die Stabilisierung, man erhält transparente Formmassen, es besteht die Möglichkeit der halogenfreien Flammschutzausrüstung und man erhält überraschenderweise eine Stabilisierung trotz elektronegativen Substitution des Phosphors.

Polycarbonate mit verschiedenen Alkali- oder Erdalkalisulfonaten flammwidrig auszurüsten ist bekannt (siehe beispielsweise US-PS-3 933 734, US-PS-3 940 366, US-PS-3 953 399, US-PS-3 926 908, US-PS-4 104 246 und EP-0 392 252 (Le A 26 733)).

Triphenylphosphansulfonate der Formel (I) sind unseres Erachtens darin nicht als Flammschutzmittel erwähnt und auch durch diese Literaturstellen nicht nahegelegt.

Andererseits ist die Stabilisierung von Polycarbonaten durch Phosphane bekannt (siehe beispielsweise EP-B1-0 043 998 (Le A 20 430), DE-OS 3 332 065 (Le A 22 588), EP-0 143 906 (Le A 22 588-EP) und DE-OS 3 933 545 (Le A 27 209)).

Triphenylphosphansulfonate der Formel (I) sind unseres Erachtens darin nicht als Stabilisatoren erwähnt, ebensowenig als Flammschutzmittel.

In letzteren De-OS 3 933 545 wird lediglich ausgeführt (Seite 8, Zeile 57), daß die dort beschriebenen Polycarbonate auch Flammschutzmittel enthalten können.

Bekannt ist auch der kombinierte Einsatz von Salzen mit fluorierten Polyolefinen zur Flammfestausrüstung von Polycarbonaten (siehe beispielsweise DE-OS 2 535 262, DE-OS 2 744 016 und bereits erwähnte EP-0 392 252).

Triphenylphosphansulfonate der Formel (I) in Kombination mit fluorierten Polyolefinen sind unseres Erachtens darin nicht als Flammschutzmittel erwähnt und auch nicht durch diese Literaturstellen nahegelegt.

Thermoplastische, aromatische Polycarbonate im Sinne der vorliegenden Erfindung sind sowohl Homopolycarbonate als auch Copolycarbonate; die Polycarbonate können in bekannter Weise linear oder verzweigt sein.

Ein Teil, bis zu 80 Mol-%, vorzugsweise von 20 Mol-% bis zu 50 Mol-% der Carbonat-Gruppen in den erfindungsgemäß geeigneten Polycarbonaten können durch aromatische Dicarbonsäureester-Gruppen ersetzt sein. Derartige Polycarbonate, die sowohl Säurereste der Kohlensäure als auch Säurereste von aromatischen Dicarbonsäuren in die Molekülkette eingebaut enthalten, sind, genau bezeichnet, aromatische Polyestercarbonate. Sie sollen der Einfachheit halber in vorliegender Anmeldung unter dem Oberbegriff der thermoplastischen, aromatischen Polycarbonate subsummiert werden.

Die Herstellung der erfindungsgemäß zu stabilisierenden Polycarbonate erfolgt in bekannter Weise aus Diphenolen, Kohlensäurederivaten, gegebenenfalls Kettenabbrechem und gegebenenfalls Verzweigem, wobei zur Herstellung der Polyestercarbonate ein Teil der Kohlensäurederivate durch aromatische Dicarbonsäuren oder Derivate der Dicarbonsäuren ersetzt werden, und zwar je nach Maßgabe der in den aromatischen Polycarbonaten zu ersetzenden Carbonatstruktureinheiten durch aromatische Dicarbonsäureesterstruktureinheiten.

Einzelheiten der Herstellung von Polycarbonaten sind bekannt und in Hunderten von Patentschriften seit etwa 40 Jahren niedergelegt. Beispielhaft sei hier nur auf "Schnell", Chemistry and Physics of Polycarbonates", Polymer Reviews, Volume 9, Interscience Publishers, New York, London, Sydney 1964, auf D.C. PREVORSEK, B.T. DEBONA and Y. KESTEN, Corporate Research Center, Allied Chemical Corporation, Morristown, New Jersey 07960, "Synthesis of Poly(ester Carbonate) Copolymers" in Journal of Polymer Science, Polymer Chemistry Edition, Vol. 18, 75-90 (1980), auf D. Freitag, U. Grigo, P.R. Müller, H. Nouvertne', BAYER AG, "Polycarbonates" in Encyclopedia of Polymer Science and Engineering, Volume 11, Second Edition, 1988, Seiten 648-718 und schließlich auf Dres. U. Grigo, K. Kircher und P.R. Müller "Polycarbonate" in Becker/Braun, Kunststoff-Handbuch, Band 3/1, Polycarbonate, Polyacetale, Polyester, Celluloseester, Carl Hanser Verlag München, Wien 1992, Seiten 117-299 verwiesen.

Die thermoplastischen Polycarbonate einschließlich der thermoplastischen, aromatischen Polyestercarbonate haben mittlere Molekulargewichte Mw (ermittelt durch Messung der relativen Viskosität bei 25°C in CH₂Cl₂ und einer Konzentration von 0,5 g pro 100 ml CH₂Cl₂) von 12 000 bis 120 000, vorzugsweise von 18 000 bis 80 000 und insbesondere von 22 000 bis 60 000.

Für die Herstellung der erfindungsgemäß zu stabilisierenden Polycarbonate geeignete Diphenole sind beispielsweise Hydrochinon, Resorcin, Dihydroxydiphenyle, Bis-(hydroxyphenyl)-alkane, Bis(hydroxyphenyl)-cycloalkane, Bis(hydroxyphenyl)-sulfide, Bis-(hydroxyphenyl)-ether, Bis-(hydroxyphenyl)-ketone, Bis-(hydroxyphenyl)-sulfone, Bis-(hydroxyphenyl)-sulfoxide, α,α'-Bis-(hydroxyphenyl)-diisopropylbenzole, sowie deren kernalkylierte und kernhalogenierte Verbindungen.

Bevorzugte Diphenole sind 4,4'-Dihydroxydiphenyl, 2,2-Bis-(4-hydroxyphenyl)-propan, 2,4-Bis-(4-hydroxyphenyl)-2-methylbutan, 1,1-Bis-(4-hydroxyphenyl)-p-diisopropylbenzol, 2,2-Bis-(3-methyl-4-hydroxyphenyl)-propan, 2,2-Bis-(3-chlor-4-hydroxyphenyl)-propan, Bis-(3,5-dimethyl-4-hydroxyphenyl)-methan, 2,2-Bis-(3,5-dimethyl-4-hydroxyphenyl)-propan, Bis-(3,5-dimethyl-4-hydroxyphenyl)-sulfon, 2,4-Bis-(3,5-dimethyl-4-hydroxyphenyl)-2-methylbutan, 1,1-Bis-(4-hydroxyphenyl)-p-diisopropylbenzol, 1,1-Bis-(3,5-dimethyl-4-hydroxyphenyl)-p-diisopropylbenzol, 2,2-Bis-(3,5-dichlor-4-hydroxyphenyl)-propan, 2,2-Bis-(3,5-dibrom-4-hydroxyphenyl)-propan und 1,1-Bis-(4-hydroxyphenyl)-3,3,5-trimethylcyclohexan.

Besonders bevorzugte Diphenole sind 2,2-Bis-(4-hydroxyphenyl)-propan, 2,2-Bis(3,5-dimethyl-4-hydroxyphenyl)-propan, 2,2-Bis-(3,5-dichlor-4-hydroxyphenyl)-propan, 2,2-Bis-(3,5-dibrom-4-hydroxyphenyl)-propan, 1,1-Bis-(4-hydroxyphenyl)-cyclohexan und 1,1-Bis-(4-hydroxyphenyl)-3,3,5-trimethylcyclohexan.

Diese und weitere geeignete Diphenole sind z.B. in den US-PS 3 028 635, 2 999 835, 3 148 172, 2 991 273, 3 271 367, 4 982 014 und 2 999 846, in den deutschen Offenlegungsschriften 1 570 703, 2 063 050, 2 036 052, 2 211 956 und 3 832 396, der französischen Patentschrift 1 561 518, in der Monographie "H. Schnell, Chemistry and Physics of Polycarbonates, Interscience Publishers, New York 1964" sowie in den japanischen Offenlegungsschriften 62039/1986, 62040/1986 und 105550/1986 beschrieben.

Im Falle der Homopolycarbonate wird nur ein Diphenol eingesetzt, im Falle der Copolycarbonate werden mehrere Diphenole eingesetzt.

Geeignete Kettenabbrecher sind sowohl Monophenole als auch Monocarbonsäuren. Geeignete Monophenole sind Phenol selbst, Alkylphenole wie Kresole, p-tert.-Butylphenol, p-n-Octylphenol, p-iso-Octylphenol, p-n-Nonylphenol und p-iso-Nonylphenol, Halogenphenole wie p-Chlorphenol, 2,4-Dichlorphenol, p-Bromphenol und 2,4,6-Tribromphenol.

Geeignete Monocarbonsäuren sind Benzoesäure, Alkylbenzoesäuren und Halogenbenzoesäuren.

Bevorzugte Kettenabbrecher sind die Phenole der Formel (I) 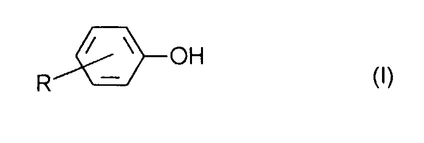 worin
- R: ein verzweigter oder unverzweigter C₈- und/oder C₉-Alkylrest ist.

Die Menge an einzusetzendem Kettenabbrecher beträgt 0,5 Mol-% bis 10 Mol-%, bezogen auf Mole an jeweils eingesetzten Diphenolen. Die Zugabe der Kettenabbrecher kann vor, während oder nach der Phosgenierung erfolgen.

Geeignete Verzweiger sind die in der Polycarbonatchemie bekannten tri- oder mehr als trifunktionellen Verbindungen, insbesondere solche mit drei oder mehr als drei phenolischen OH-Gruppen.

Geeignete Verzweiger sind beispielsweise Phloroglucin, 4,6-Dimethyl-2,4,6-tri-(4-hydroxyphenyl)-hepten-2, 4,6-Dimethyl-2,4,6-tri-(4-hydroxyphenyl)-heptan, 1,3,5-Tri-(4-hydroxyphenyl)-benzol, 1,1,1-Tri-(4-hydroxyphenyl)-ethan, Tri-(4-hydroxyphenyl)-phenylmethan, 2,2-Bis-[4,4-bis-(4-hydroxyphenyl)-cyclohexyl]-propan, 2,4-Bis-(4-hydroxyphenyl-isopropyl)-phenol, 2,6-Bis-(2-hydroxy-5'-methyl-benzyl)-4-methylphenol, 2-(4-Hydroxyphenyl)-2-(2,4-dihydroxyphenyl)-propan, Hexa-(4-(4-hydroxyphenyl-isopropyl)-phenyl)-orthoterephthalsäureester, Tetra-(4-hydroxyphenyl)-methan, Tetra-(4-(4-hydroxyphenyl-isopropyl)-phenoxy)-methan und 1,4-Bis-(4',4"-dihydroxytriphenyl)-methyl)-benzol sowie 2,4-Dihydroxybenzoesäure, Trimesinsäure, Cyanurchlorid und 3,3-Bis-(3-methyl-4-hydroxyphenyl)-2-oxo-2,3-dihydroindol.

Die Menge der gegebenenfalls einzusetzenden Verzweiger beträgt 0,05 Mol-% bis 2 Mol-%, bezogen wiederum auf Mole an jeweils eingesetzten Diphenolen.

Die Verzweiger können entweder mit den Diphenolen und den Kettenabbrechem in der wäßrig alkalischen Phase vorgelegt werden, oder in einem organischen Lösungsmittel gelöst vor der Phosgenierung zugegeben werden.

Alle diese Maßnahmen zur Herstellung der Polycarbonate sind dem Fachmann geläufig.

Für die Herstellung der Polyestercarbonate geeignete aromatische Dicarbonsäuren sind beispielsweise Orthophthalsäure, Terephthalsäure, Isophthalsäure, tert.-Butylisophthalsäure, 3,3'-Diphenyldicarbonsäure, 4,4'-Diphenyldicarbonsäure, 4,4'-Benzophenondicarbonsäure, 3,4'-Benzophenondicarbonsäure, 4,4'-Diphenyletherdicarbonsäure, 4,4'-Diphenylsulfondicarbonsäure, 2,2-Bis-(4-carboxyphenyl)-propan, Trimethyl-3 -phenylindan-4,5'-dicarbonsäure.

Von den aromatischen Dicarbonsäuren werden besonders bevorzugt die Terephthalsäure und/oder Isophthalsäure eingesetzt.

Derivate der Dicarbonsäuren sind die Dicarbonsäuredihalogenide und die Dicarbonsäurediarylester, insbesondere die Dicarbonsäuredichloride und die Dicarbonsäurediphenylester.

Der Ersatz der Carbonatgruppen durch die aromatischen Dicarbonsäureestergruppen erfolgt im wesentlichen stöchiometrisch und auch quantitativ, so daß das molare Verhältnis der Reaktionspartner sich auch im fertigen Polyestercarbonat wiederfindet. Der Einbau der aromatischen Dicarbonsäureestergruppen kann sowohl statistisch als auch blockweise erfolgen.

Bevorzugte Herstellungsweisen der erfindungsgemäß zu stabilisierenden Polycarbonate, einschließlich der Polyestercarbonate sind das bekannte Grenzflächenverfahren und das bekannte Schmelzumesterungsverfahren.

Im ersten Fall dient als Kohlensäurederivat vorzugsweise Phosgen, im letzteren Fall vorzugsweise Diphenylcarbonat.

Katalysatoren, Lösungsmittel, Aufarbeitung, Reaktionsbedingungen etc. sind in beiden Fällen hinreichend beschrieben und bekannt.

In den Triphenylphosphansulfonaten der Formel (I) sind R¹ bis R³ vorzugsweise H, CH₃ oder CH₃-O-, besonders bevorzugt H, ist vorzugsweise mindestens ein X = H, sind besonders bevorzugt beide X = H, ist Y bevorzugt Li, Na, K, Mg oder Ca, besonders bevorzugt Na, K, Mg oder Ca, sind die Sulfonatgruppen vorzugsweise in m-Stellung zum Phosphor, und die Reste R¹ bis R³ vorzugsweise in o- oder p-Stellung zum Phosphor und ganz besonders bevorzugt in p-Stellung.

Die erfindungsgemäß einzusetzenden Sulfonate (I) sind literaturbekannt (siehe beispielsweise EP-0 287 066, 0 355 837, 0 041 134, DE-OS 4 006 112, 2 627 354, 3 235 030, 3 431 643, 2 700 904, 2 733 516 und DE-OS 2 627 354 sowie Monatshefte 96, Seiten 2051-2057 (1965) oder J. Chem. Soc. 1958, Seiten 276-288) oder nach literaturbekannten Verfahren erhältlich.

Geeignete Triphenylphosphansulfonate der Formel (I) sind beispielsweise die Alkali- und Erdalkalisalze von (p-Sulfophenyl)-diphenylphosphan, (m-Sulfophenyl)-diphenylphosphan, (p-Sulfo-o-methylphenyl)-di-(o-methylphenyl)-phosphan, (m-Sulfo-p-methylphenyl)-di-(p-methylphenyl)-phosphan, (p-Sulfo-o-methoxyphenyl)-di-(o-methoxyphenyl)-phosphan, (m-Sulfo-p-methoxyphenyl)-di-(p-methoxyphenyl)-phosphan, (m-Sulfo-phenyl)-(p-carboxyphenyl)-phenylphosphan, (m-Sulfo-p-methylphenyl)-diphenylphosphan, (p-Sulfophenyl)-di-(p-methoxyphenyl)-phosphan, (p-Sulfophenyl)-di-(p-methylphenyl)-phosphan, (m-Sulfo-p-ethylphenyl)-di-(p-ethylphenyl)-phosphan und von (m-Sulfo-p-chlorphenyl)-di-(p-chlorphenyl)-phosphan;
die Alkali- und Erdalkalisalze von Di-(m-sulfophenyl)-diphenylphosphan, Di-(m-sulfo-o-methylphenyl)-(o-methylphenyl)-phosphan, Di-(p-sulfophenyl)-phenylphosphan, Di-(m-sulfo-p-methylphenyl)-(p-methylphenyl)-phosphan, Di-(m-sulfo-p-methoxyphenyl)-(p-methoxyphenyl)-phosphan, Di-(m-sulfo-p-chlorphenyl)-(p-chlorphenyl)-phosphan und von (p-Sulfophenyl)-(m-sulfophenyl)-phenylphosphan;
die Alkalisalze von Tri-(p-sulfophenyl)-phosphan, Tri-(m-sulfophenyl)-phosphan, Tri-(m-sulfo-p-methylphenyl)-phosphan, Tri-(m-sulfo-p-chlorphenyl)-phosphan, Tri-(m-sulfo-p-methoxyphenyl)-phosphan, Tri-(m-sulfo-p-ethylphenyl)-phosphan und von Tri-(p-sulfo -o-methylphenyl)-phosphan.

Die Salze (I) werden besonders bevorzugt in Mengen von 0,01 bis 0,6 Gew.-% und ganz besonders bevorzugt in Mengen von 0,02 bis 0,5 Gew.-%, bezogen auf Gewicht Polycarbonat eingesetzt.

Die erfindungsgemäß geeigneten fluorierten Polyolefine gemäß Komponente b) sind Polymere mit Fluorgehalten von 65 bis 76 Gew.-%, vorzugsweise 70 bis 76 Gew.-%. Beispiele sind Polytetrafluorethylen, Tetrafluorethylen-Hexafluorpropylen-Copolymere oder Tetrafluorethylen-Copolymerisate mit geringen Mengen fluorfreier copolymerisierbarer ethylenisch ungesättigter Monomerer. Die Polymerisate sind bekannt. Sie können nach bekannten Verfahren hergestellt werden, so beispielsweise durch Polymerisation von Tetrafluorethylen in wäßrigem Medium mit einem freie Radikale bildenden Katalysator, beispielsweise Natrium-, Kalium- oder Ammoniumperoxidisulfat bei Drucken von 7 bis 71 kg/cm² und bei Temperaturen von 0 bis 200°C, vorzugsweise bei Temperaturen von 20 bis 100°C. (Nähere Einzelheiten siehe beispielsweise US-Patent 2 393 967). Die mittleren Teilchengrößen der fluorierten Polyolefine liegen vorzugsweise zwischen 0,05 µm und 20 µm.

Die erfindungsgemäßen Mischungen werden in bekannter Weise durch Schmelzcompoundierung oder Schmelzextrusion bei Temperaturen zwischen 260°C und 360°C, vorzugsweise zwischen 260°C und 300°C hergestellt, nachdem die Komponenten a) und gegebenenfalls b) entweder sukzessive oder simultan den Polycarbonaten bei 25°C (Raumtemperatur) oder bei höheren Temperaturen zugemischt worden sind.

Gegenstand der vorliegenden Erfindung ist somit auch ein Verfahren zur Herstellung der erfindungsgemäßen Mischungen aus thermoplastischen, aromatischen Polycarbonaten und den Komponenten a) und gegebenenfalls b), das dadurch gekennzeichnet ist, daß man die Komponente a) und gegebenenfalls die Komponente b) mit dem Polycarbonat bei 25°C oder bei höherer Temperatur vermischt und anschließend bei Temperaturen zwischen 260°C und 360°C, vorzugsweise zwischen 260°C und 300°C in gebräuchlichen Aggregaten schmelzcompoundiert oder schmelzextrudiert.

Die Zudosierung der Komponente a) und gegebenenfalls der Komponente b) kann auch nach dem sogenannten Masterbatchverfahren als Konzentrat in den entsprechenden thermoplastischen, aromatischen Polycarbonaten erfolgen, wobei derartige Konzentrate einen Gehalt von 5 bis 20 Gew.-% an Komponente a) und gegebenenfalls b) im Polycarbonat aufweisen.

Den erfindungsgemäßen Mischungen können auch noch die üblichen, für thermoplastische Polycarbonate geeigneten Additive oder Zusatzstoffe wie Glasfasern, Füllstoffe, Pigmente, UV-Stabilisatoren und Entformungsmittel in den für Polycarbonate üblichen Methoden zugesetzt werden.

Gegenstand der vorliegenden Erfindung sind somit auch die erfindungsgemäßen Mischungen aus den thermoplastischen, aromatischen Polycarbonaten, den Komponenten a) und gegebenenfalls b), die dadurch gekennzeichnet sind, daß sie zusätzlich Glasfasern, Füllstoffe, Pigmente, UV-Stabilisatoren und/oder Entformungsmittel in den für Polycarbonate üblichen Mengen enthalten.

Gegenstand der vorliegenden Erfindung ist außerdem ein Verfahren zur Herstellung dieser letztgenannten Mischungen, das dadurch gekennzeichnet ist, daß man thermoplastische, aromatische Polycarbonate mit den Komponenten a) und gegebenenfalls b), sowie zusätzlich mit Glasfasern, Füllstoffen, Pigmenten, UV-Stabilisatoren und/oder Entformungsmitteln bei 25°C oder bie höheren Temperaturen vermischt und anschließend bei Temperaturen zwischen 260°C und 360°C, vorzugsweise zwischen 260°C und 300°C in gebräuchlichen Aggregaten schmelzcompoundiert oder schmelzextrudiert.

Auch hierbei kann wiederum die Masterbatchmethode angewandt werden und die einzelnen Zusätze in Form eines Konzentrats im Polycarbonat zugesetzt werden.

Die erfindungsgemäßen Mischungen können auf bekannte Weise und auf bekannten Maschinen zu beliebigen Formkörpern verarbeitet werden, beispielsweise zu Platten, Rohren, Flaschen und Folien.

Diese Produkte sowie die diesen Produkten zugrundeliegenden, erfindungsgemäßen Mischungen zeichnen sich durch gute Flammwidrigkeit und Thermostabilität und, sofern keine störenden Additive, wie Pigmente, Glasfasern, Füllstoffe etc. zugesetzt werden, auch durch gute Transparenz aus.

Die Produkte sind somit technisch vielseitig brauchbar, beispielsweise auf dem Gebiet der Elektronik, der Elektrotechnik und auf dem Bausektor.

Geeignete Formkörper sind beispielsweise Platten, Schaltkästenabdeckungen und Sichtfenster im Elektronik-Bereich.

Die Behandlung der Formkörper aus den erfindungsgemäßen Mischungen bei hohen Temperaturen erfolgt beispielsweise durch Heißluftalterung bei 130°C für 1.000 Stunden. Die Transmission wurde nach ASTM 1003, der Yellownessindex nach ASTM D gemessen.

Synthesebeispiele für Salze von Triphenylphosphansulfonsäuren
I. Zu 260 g eines 20%igen Oleums gab man bei Raumtemperatur unter Rühren und Stickstoff portionsweise 26 g Triphenylphosphan in 15 bis 30 Minuten hinzu und ließ 18 h bei 25°C rühren. Das Reaktionsgemisch wurde auf 2 kg Eis gegossen und mit konz. Natronlauge auf pH 6,5 gestellt, nach Stehen über Nacht die ausgefallenen Kristalle abgesaugt und getrocknet: 28 g
Diese Kristalle wurden dreimal mit Methanol ausgekocht, die klaren Filtrate vereinigt eingedampft und der Rückstand im Vakuum getrocknet:
20,7 g farblose Kristalle

| Elementaranalyse: | P % | S % |
|---|---|---|
| gef. | 6,5 | 13,2 |
| ber. | 6,6 | 13,7 |

berechnet für das Dinatriumsalz der Triphenylphosphandisulfonsäure.
II. Zu 108 g eines 20%igen Oleums gab man bei Raumtemperatur unter Rühren, Kühlen und Stickstoff portionsweise in ca. 30 Minuten 26 g Triphenylphosphan portionsweise hinzu und erwärmte die klare Mischung 40 Minuten lang auf 82°C. Danach war eine Probe der Reaktionsmischung klar löslich in Wassser. Nach Abkühlen wurde das Gemisch auf 60 g Eis gegossen und mit konz. Natronlauge auf pH 7 gebracht, die aus der erkalteten Lösung ausgefallenen Kristalle wurden abgesaugt, getrocknet und mit Methanol zwei- bis dreimal ausgekocht. Die vereinigten klaren Filtrate wurden eingedampft und der Rückstand im Vakuum getrocknet: 25 g farblose Kristalle

| Elementaranalyse: | P | S |
|---|---|---|
| gef. | 7,9 | 8,9 |
| ber. | 8,5 | 8,8 |

berechnet für das Natriumsalz der Triphenylphosphansulfonsäure.

### Beispiele

### Beispiel 1

99,9 Gew.-% eines aromatischen Polycarbonats aus 2,2-Bis-(4-hydroxyphenyl)propan (Schmelzindex 8, gemessen nach DIN 53735) mit Phenol als Kettenabbrecher wurde bei 280°C auf einem Doppelwellenextruder aufgeschmolzen. Dann dosierte man 0,1 Gew.-% Natriumtriphenylphosphansulfonat (Beispiel II) direkt in die Polycarbonatschmelze. Der Polymerstrang wurde gekühlt, granuliert, das Granulat im Vakuumtrockenschrank bei 80°C getrocknet und auf einer Spritzgußmaschine bei 280°C zu Prüfkörpern mit den Abmessungen 127 x 12 x 3,2 mm verspritzt.

Die Prüfstäbe wurden dann einer Brennbarkeitsprüfung gemäß Vorschrift UL 94 (Brennbarkeit fester Kunststoffproben, Underwriter Laboratories) unterworfen und der Brennbarkeitsklasse V0 zugeordnet.

### Beispiel 2

99,9 Gew.-% eines aromatischen Polycarbonats aus 2,2-Bis-(4-hydroxyphenyl)propan (Schmelzindex 8, gemessen nach DIN 53735) mit Phenol als Kettenabbrecher wurde bei 280°C auf einem Doppelwellenextruder aufgeschmolzen. Dann dosierte man 0,1 Gew.-% Dinatriumtriphenylphosphandisulfonat (Beispiel I) direkt in die Polycarbonatschmelze. Der Polymerstrang wurde gekühlt, granuliert, das Granulat im Vakuumtrockenschrank bei 80°C getrocknet und auf einer Spritzgußmaschine bei 280°C zu Prüfkörpern mit den Abmessungen 127 x 12 x 3,2 mm verspritzt.

Die Prüfstäbe wurden dann einer Brennbarkeitsprüfung gemäß Vorschrift UL 94 (Brennbarkeit fester Kunststoffproben, Underwriter Laboratories) unterworfen und der Brennbarkeitsklasse V0 zugeordnet.

### Beispiel 3

99,7 Gew.-% eines aromatischen Polycarbonats aus 2,2-Bis-(4-hydroxyphenyl)propan (Schmelzindex 11, gemessen nach DIN 53735) mit Phenol als Kettenabbrecher wurde bei 280°C auf einem Doppelwellenextruder aufgeschmolzen. Dann dosierte man eine Mischung aus 0,2 Gew.-% Natriumtriphenylphosphansulfonat und 0,1 Gew.-% fluoriertes Polyolefin direkt in die Polycarbonatschmelze. Der Polymerstrang wurde gekühlt, granuliert, das Granulat im Vakuumtrockenschrank bei 80°C getrocknet und auf einer Spritzgußmaschine bei 280°C zu Prüfkörpern mit den Abmessungen 127 x 12 x 1,6 mm verspritzt.

Die Prüfstäbe wurden dann einer Brennbarkeitsprüfung gemäß Vorschrift UL 94 (Brennbarkeit fester Kunststoffproben, Underwriter Laboratories) unterworfen und der Brennbarkeitsklasse V0 zugeordnet.

### Beispiel 4

99,7 Gew.-% eines aromatischen Polycarbonats aus 2,2-Bis-(4-hydroxyphenyl)propan (Schmelzindex 11, gemessen nach DIN 53735) mit Phenol als Kettenabbrecher wurde bei 280°C auf einem Doppelwellenextruder aufgeschmolzen. Dann dosierte man eine Mischung aus 0,2 Gew.-% Dinatriumtriphenylphosphandisulfonat und 0,1 Gew.-% fluoriertes Polyolefin direkt in die Polycarbonatschmelze. Der Polymerstrang wurde gekühlt, granuliert, das Granulat im Vakuumtrockenschrank bei 80°C getrocknet und auf einer Spritzgußmaschine bei 280°C zu Prüfkörpern mit den Abmessungen 127 x 12 x 1,6 mm verspritzt.

Die Prüfstäbe wurden dann einer Brennbarkeitsprüfung gemäß Vorschrift UL 94 (Brennbarkeit fester Kunststoffproben, Underwriter Laboratories) unterworfen und der Brennbarkeitsklasse V0 zugeordnet.

### Vergleichsbeispiel 1

100 Gew.-% eines aromatischen Polycarbonats aus 2,2-Bis-(4-hydroxy)propan (Schmelzindex 8, gemessen nach DIN 53735) mit Phenol als Kettenabbrecher wurde bei 280°C auf einem Doppelwellenextruder aufgeschmolzen. Der Polymerstrang wurde gekühlt und granuliert.

Das Granulat wurde im Vakuumtrockenschrank bei 80°C getrocknet und auf einer Spritzgußmaschine bei 280°C zu Prüfkörpern mit den Abmessungen 127 x 12 x 3,2 mm und 127 x 12 x 1,6 mm verspritzt.

Die Prüfstäbe wurden dann einer Brennbarkeitsprüfung gemäß Vorschrift UL 94 (Brennbarkeit fester Kunststoffproben, Underwriter Laboratories) unterworfen und beide Dicken der Brennbarkeitsklasse V2 zugeordnet.

### Vergleichsbeispiel 2

99,9 Gew.-% eines aromatischen Polycarbonats aus 2,2-Bis-(4-hydroxy)propan (Schmelzindex 8, gemessen nach DIN 53735) mit Phenol als Kettenabbrecher wurde bei 280°C auf einem Doppelwellenextruder aufgeschmolzen. Dann dosierted man 0,1 Gew.-% Kaliumperfluorbutansulfonat direkt in die Polycarbonatschmelze. Der Polymerstrang wurde gekühlt und granuliert.

Das Granulat wird im Vakuumtrockenschrank bei 80°C getrocknet und auf einer Spritzgußmaschine bei 280°C zu Prüfkörpern mit den Abmessungen 127 x 12 x 3,2 mm und 127 x 12 x 1,6 mm verspritzt.

Die Prüfstäbe wurden dann einer Brennbarkeitsprüfung gemäß Vorschrift UL 94 (Brennbarkeit fester Kunststoffproben, Underwriter Laboratories) unterworfen und beide Dicken der Brennbarkeitsklasse V2 zugeordnet.

Von den Formmassen aus den Beispielen 1, 2 und Vergleichsbeispiel 1 wurden Farbmusterplättchen mit den Abmessungen 60 x 40 x 4 mm bei 300°C und 360°C Massetemperatur abgespntzt und deren Yellowness-Index (NY) und Transmission TY unmittelbar danach und dann nach verschiedenen Belichtungszeiten gemessen. (siehe nachfolgende Tabelle)

| **Yellowness Index** nach DIN 6164 ASTM D 1925 Messungen mit dem Hunterlab Lichtart C (°C/d) ohne Glanz | | | |
|---|---|---|---|
| Proben Bezeichnung | Lagerzeit h | Normalfarbwerte TY | Yellowness Index |
| Vergleichsbsp. 1 | 0 | 89,36 | 5,0 |
| | 500 | 89,65 | 6,1 |
| aus Bsp. 2 | 0 | 88,77 | 5,3 |
| | 500 | 88,67 | 5,8 |
| aus Bsp. 1 | 0 | 88,29 | 5,7 |
| | 500 | 88,57 | 6,2 |
| Vergleichsbsp. 1 | 0 | 89,76 | 5,2 |
| | 500 | 89,47 | 6,7 |
| aus Bsp. 2 | 0 | 88,96 | 5,2 |
| | 500 | 88,91 | 6,1 |
| aus Bsp. 1 | 0 | 88,33 | 5,4 |
| | 500 | 83,50 | 6,8 |

## Patentansprüche

1. Mischungen aus thermoplastischen, aromatischen Polycarbonaten und
a) Triphenylphosphansulfonaten der Formel (I) 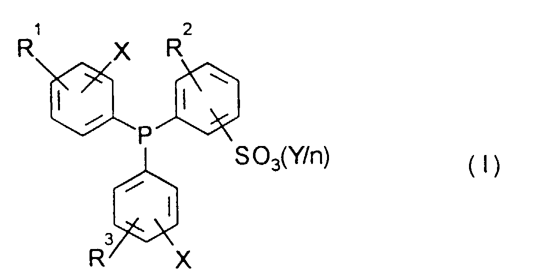 in Mengen von 0,001 Gew.-% bis 1 Gew.-%, bezogen auf Gewicht Polycarbonat, worin "R¹, R² und R³" gleich oder verschieden sind und H, C₁-C₄-Alkyl, C₁-C₄-Alkoxy, F, Cl, Carboxy oder -CN sein können,
"X" Wasserstoff oder -SO₃(Y/n), und n = 1, wenn "Y" ein Alkalikation, und n = 2, wenn "Y" ein Erdalkalikation ist,
wobei die Sulfonat-Gruppen in m- oder p-Stellung zum Phosphor stehen und die Reste R¹, R² und R³ in o-, m- und p-Stellung zum Phosphor stehen, und gegebenenfalls
b) fluorierten Polyolefinen in Mengen von 0,001 Gew.-% bis 1 Gew.-%, bezogen wiederum auf Gewicht Polycarbonat.

2. Verfahren zur Herstellung der Mischungen des Anspruchs 1, dadurch gekennzeichnet, daß man die Komponente a) und gegebenenfalls die Komponente b) mit dem Polycarbonat bei 25°C oder bei höherer Temperatur vermischt und anschließend bei Temperaturen zwischen 260°C und 360°C in gebräuchlichen Aggregaten schmelzcompoundiert oder schmelzextrudiert.

3. Mischungen gemäß Anspruch 1, dadurch gekennzeichnet, daß sie zusätzlich Glasfasern, Füllstoffe, Pigmente, UV-Stabilisatoren und/oder Entformungsmittel in den für Polycarbonate üblichen Mengen enthalten.

4. Verfahren zur Herstellung der Mischungen des Anspruchs 3, dadurch gekennzeichnet, daß man thermoplastische, aromatische Polycarbonate mit den Komponenten a) und gegebenenfalls b) sowie zusätzlich mit Glasfasern, Füllstoffen, Pigmenten, UV-Stabilisatoren und/oder Entformungsmitteln bei 25°C oder bei höheren Temperaturen vermischt und anschließend bei Temperaturen zwischen 260°C und 360°C in gebräuchlichen Aggregaten schmelzcompoundiert oder schmelzextrudiert.

## Claims

1. Blends of thermoplastic, aromatic polycarbonates and
a) triphenylphosphane sulfonates of the formula (I) 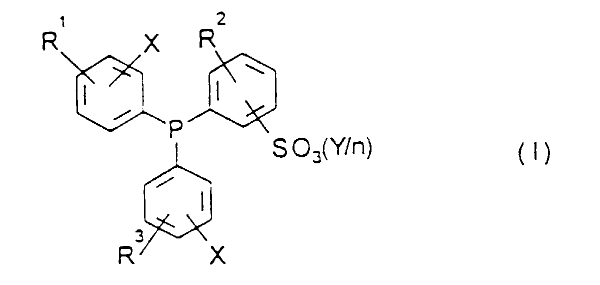 in quantities of 0.001 wt.% to 1 wt.%, relative to the weight of polycarbonate, in which "R¹, R² and R^{3"} are identical or different and may be H, C₁-C₄ alkyl, C₁-C₄ alkoxy, F, Cl, carboxy or -CN,
"X" is hydrogen or -SO₃(Y/n), and n = 1 if "Y" is an alkali metal cation and n = 2 if "Y" is an alkaline earth metal cation,
wherein the sulfonate groups are in m- or p-position relative to the phosphorus and the residues R¹, R² and R³ are in o-, m- and p-position relative to the phosphorus, and optionally
b) fluorinated polyolefins in quantities of 0.001 wt.% to 1 wt.%, again relative to the weight of polycarbonate.

2. Process for the production of the blends according to claim 1, characterised in that component a) and optionally component b) are mixed with the polycarbonate at 25°C or at a higher temperature and then melt-compounded or melt-extruded in conventional equipment at temperatures of between 260°C and 360°C.

3. Blends according to claim 1, characterised in that they additionally contain glass fibres, fillers, pigments, UV stabilisers and/or mould release agents in the quantities conventional for polycarbonates.

4. Process for the production of the blends of claim 3, characterised in that thermoplastic, aromatic polycarbonates are mixed with components a) and optionally b), additionally together with glass fibres, fillers, pigments, UV stabilisers and/or mould release agents at 25°C or at higher temperatures and then melt-compounded or melt-extruded in conventional equipment at temperatures of between 260°C and 360°C.

## Revendications

1. Mélanges de polycarbonates aromatiques thermoplastiques, et
a) de triphénylphosphanesulfonates répondant à la formule (I) 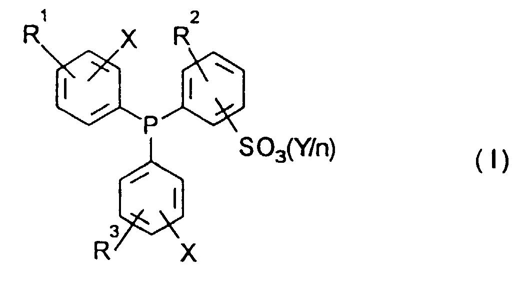 dans des quantités de 0,001% en poids à 1% en poids rapporté au poids du polycarbonate, dans laquelle les radicaux R¹, R² et R³ sont identiques ou différents et peuvent représenter un atome d'hydrogène, un groupe alkyle en C₁-C₄, un groupe alcoxy en C₁-C₄, un atome de fluor, un atome de chlore, un groupe carboxyle ou un groupe -CN,
X représente un atome d'hydrogène ou un groupe -SO₃(Y/n), et n = 1 lorsque Y représente un cation de métal alcalin et n = 2 lorsque Y représente un cation de métal alcalinoterreux,
les groupes sulfonate se trouvant en position méta ou para par rapport à l'atome de phosphore et les radicaux R¹, R² et R³ se trouvant en positions ortho, méta et para par rapport à l'atome de phosphore, et éventuellement
b) de polyoléfines fluorées dans des quantités de 0,001% en poids à 1% en poids une nouvelle fois rapporté au poids du polycarbonate.

2. Procédé pour la préparation des mélanges selon la revendication 1, caractérisé en ce qu'on mélange le composant a) et éventuellement le composant b) avec le polycarbonate à une température de 25°C ou à une température supérieure et on soumet ultérieurement le mélange à des températures entre 260°C et 360°C, dans des agrégats habituels, à un mélangeage intime en fusion ou à une extrusion en fusion.

3. Mélanges selon la revendication 1, caractérisés en ce qu'ils contiennent en outre des fibres de verre, des matières de charge, des pigments, des stabilisateurs UV et/ou des agents de démoulage, dans les quantités habituelles pour des polycarbonates.

4. Procédé pour la préparation des mélanges selon la revendication 3, caractérisé en ce qu'on mélange des polycarbonates aromatiques, thermoplastiques avec les composants a) et éventuellement b) et, en outre, avec des fibres de verre, des matières de charge, des pigments, des stabilisateurs UV et/ou des agents de démoulage, à une température de 25°C ou à des températures supérieures, et on soumet ultérieurement les mélanges à des températures entre 260°C et 360°C, dans des agrégats habituels, à un mélangeage intime en fusion ou à une extrusion en fusion.
